# NEW EUROPEAN PATENT SPECIFICATION

(11) **EP 0 668 895 B2**
(45) Date of publication and mention of the opposition decision: **28.12.2005**
(45) Mention of the grant of the patent: 26.02.1997
(21) Application number: 94901059.9
(22) Date of filing: 01.11.1993
(51) Int. Cl.: C09D 167/00, C09D 133/00, C09D 157/04, C09D 5/03

(54) **POWDER PAINT BASED ON ACID-FUNCTIONAL POLYMERS AND BETA-HYDROXYALKYLAMIDE COMPOUNDS**
PULVERLACK AUF BASIS VON SÄUREFUNKTIONELLEN POLYMEREN UND BETA-HYDROXYALKYLAMIDEN
PEINTURE PULVERULENTE A BASE DE POLYMERES A FONCTION D'ACIDE ET DE COMPOSES DE BETA-HYDROXYALKYLAMIDE

(30) Priority: 13.11.1992 NL 9201985
(43) Date of publication of application: 30.08.1995
(73) Proprietor: Koninklijke DSM N.V., 6411 TE Heerlen (NL)
(72) Inventor: HOUWELING, Marten, NL-8032 DX Zwolle (NL); BELDER, Eimbert, Gerrit, NL-8042 CS Zwolle (NL); SCHIPPERS, Jan, NL-8033 DE Zwolle (NL)
(86) International application number: PCT/NL1993/000224
(87) International publication number: WO 1994/011451

(56) References cited:
- EP-A- 0 322 827
- EP-A- 0 322 834
- EP-A- 0 471 409
- EP-B- 0 107 888
- WO-A-91/14745
- JOURNAL OF COATINGS TECHNOLOGY, vol.59, no.750, July 1987 pages 39 - 47 L. KAPILOW ET AL. 'resins and curing agents for thermosetting powder coatings' cited in the application
- K. Kronberger et al.: 'Exterior durability of polyester/hydroxyalkyl amide powder coatings: accelerated weathering studies'; JOCCA, 1991 (11), pp. 405-410

## Description

The invention relates to a powder paint comprising a polyester having free carboxylic acid groups which acts as a binder and a β-hydroxyalkylamide group-containing compound which acts as a crosslinker.

Such a powder paint is known from EP-A-322834, which describes a composition, that is applied to a substrate, and then cured by heating the powder to 160°C - 200°C. Heating at this temperature causes powder to melt and to form a coating. The coating is chemically crosslinked at 160°C - 200°C by an esterification reaction of the acid groups of the polymer with the hydroxyl groups of the β-hydroxyalkylamide group-containing compound. Water is also produced during this esterification reaction. In addition EP-A-322834 requires that benzoin (a degassing agent) be added to the composition. A degassing agent is needed in order to expel air and water from the coating which has become trapped as a result of melting the powder during a curing cycle. Gas bubbles remaining in the coating reduce the adherence and the protective effect of this coating. It has been further found that the compositions described in EP-A-322834 do not exhibit optimum flow and that gas bubbles remain in the coating if the coatings are relatively thick.

It is a purpose of the invention to provide a composition which, when applied in a powder paint formulation, produces powder coatings with substantially better flow and higher blister limit properties than coatings based on state-of-the-art compositions. The blister limit is defined to be the coat thickness at which gas bubbles remain in the coating after curing.

The resulting powder coatings and powder paints should also exhibit acceptable qualities of the other desirable properties. These properties include for example gloss, hardness, impact strength, chemical resistance and yellowing resistance.

The invention is characterized in that a polyester having a functionality of between 1.4 and 1.95 and containing less than 3 mole % of monofunctional acid or monofunctional alcohol is applied as the free carboxylic acid group-containing polyester.

The functionality is defined as the average number of reactive groups per molecule.

Polyesters used in powder coatings were generally designed to have functionalities between two an three. If the functionality was less than two the mechanical properties of the cured powder were poor due to reduced crosslinkdensity (Kapilow et al, Journal of Coatings Technology, 59, july 1978, page 43-44). Surprisingly, the coating according to the present invention possesses both good mechanical properties and good solvent resistance even though a carboxyl functional polyester having a carboxyl functionality of less than 2 is used.

The acid number of the polymer is preferably between 15 and 150 mg KOH/gram resin. More preferably, the acid number of the polyester is between 18 and 60.

Because the functionality of the polyester used is from 1.4 to 1.95, a proportion of the polyester molecules no longer possess a crosslinking function. Therefore, the functionality of the polyester is preferably greater than 1.4, and more preferably greater than 1.6. When the functionality is too low, a deterioration of the solvent resistance will result. In order to achieve optimum flow in combination with other desired properties (i.e., good gloss, hardness, impact strength, chemical resistance and yellowing resistance), the functionality is preferably lower than 1.95, and more preferably lower than 1.85.

Using known processes suitable polyesters can be obtained primarily from aromatic polycarboxylic acids. Suitable acids include for example phthalic acid, isophthalic acid, naphtalenedicarboxylic acid, terephthalic acid, pyromellitic acid, trimellitic acid, 3,6-dichlorophthalic acid and tetrachlorophthalic acid. Alternatively, polyesters can be obtained from the anhydrides, acid chlorides and lower alkyl esters thereof. The carboxylic acid component commonly consists of at least 50 mole %, preferably at least 70 mole %, of isophthalic acid and/or terephthalic acid.

Cycloaliphatic and/or acyclic polycarboxylic acids such as for example tetrahydrophthalic acid, hexahydroendomethyleneterephthalic acid, hexachlorotetrahydrophthalic acid, azelaic acid, sebacic acid, decane dicarboxylic acid, dimer fatty acid, adipic acid, succinic acid and maleic acid can be used in amounts of up to 30 mole % and preferably of up to 20 mole % of the total of carboxylic acids. Hydroxycarboxylic acids and/or lactones can also be applied, such as 12-hydroxystearic acid and epsilon-caprolactone.

Furthermore, aliphatic diols can be used and include for example ethylene glycol, 1,2-propanediol, 1,3-propanediol, 1,2-butanediol, 1,4-butanediol, 1,3-butanediol, 2,2-dimethyl-1,3-propanediol (= neopentyl glycol), the hydroxypivalic acid ester of neopentyl glycol, 2,5-hexanediol, 1,6-hexanediol, 2,2-[bis-(4-hydroxy-cyclohexyl]-propane, 1,4-dimethylol cyclohexane, diethylene glycol, dipropylene glycol and 2,2-bis-[4-(2-hydroxylethoxy)]phenyl propane and minor amounts of polyols such as glycerol, hexanetriol, pentaerythritol, sorbitol, trimethylol ethane, trimethylol propane and tris-(2-hydroxyethyl)-isocyanurate. The alcohol component preferably contains at least 50 mole % neopentyl glycol.

Suitable compounds for reacting with polycarboxylic acids also include monoepoxides such as for example ethylene oxide, propylene oxide, monocarboxylic acid glycidyl ester (e.g. Cardura E10™; Shell) and phenylglycidyl ether.

The polyesters are prepared by esterification or transesterification, whether or not in the presence of customary catalysts such as for example dibutyl tin oxide or tetrabutyltitanate. By proper selection of both the preparation conditions and the COOH/OH ratio end products whose acid numbers are between 15 and 150 can be obtained. The hydroxyl number of the polyester is generally between 0 and 20, preferably being lower than 10, and more preferably being lower than 5.

The desired average functionality can be obtained by applying a minor quantity of monofunctional acid or alcohol. Preferably, monocarboxylic acids are applied. Examples of suitable acids include for example benzoic acid, tert. butylbenzoic acid, hexahydrobenzoic acid and saturated aliphatic monocarboxylic acids. Monoalcohols or mixtures thereof can be applied in place of monocarboxylic acids. Examples of suitable alcohols include for example octanol, butanol, 2-ethylhexanol, isodecylalcohol, cyclohexanol, pentanol, hexanol and benzylalcohol.

Less than 3 mole % (calculated relative to the polyester) of such a monofunctional acid or alcohol is applied. Preferably an amount being between 0.5 and 2 mole % is applied.

If trifunctional alcohols or acids are used, the amount of monofunctional alcohol or acid applied must be such that the average functionality is between 1.4 and 1.95.

The glass transition temperature of the polyester is preferably in the range of between 30°C to 80°C, and is more preferably in the range of between 35°C to 65°C.

The viscosity of amorphous polyesters at 165°C (Emila, D = 17.6 s⁻¹) is preferably between 50 and 1000 dPas, and more preferably between 100 and 800 dPas. Crystalline polyesters normally have a lower viscosity, for example between 5 and 50 dPas at 165°C.

The powder paint can optionally contain mixtures of polyesters and polyacrylates. In addition, to the polyester and/or polyacrylate a different resin, for instance an epoxy resin, can be used.

The structural formula of the β-hydroxyalkylamide group-containing compound can be given by formula (I): 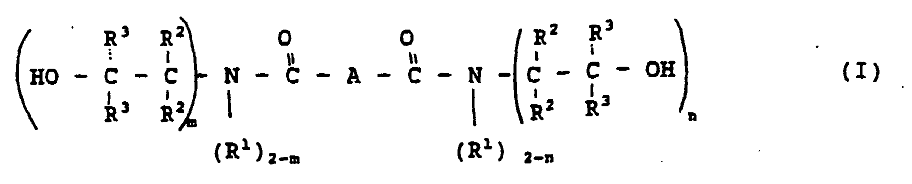 wherein:
- A represents a mono- or polyvalent organic group derived from a saturated or unsaturated alkyl group with 1-60 carbon atoms (for example ethyl, methyl, propyl, butyl, pentyl, hexyl, heptyl, octyl, nonyl, decyl, eicosyl, triacontyl, tetracontyl, pentacontyl and hexacontyl); an aryl group such as for example phenyl, naphthyl; a trialkylene amino group with 1-4 carbon atoms per alkylene group, for example trimethylene amino and triethylene amino; or an unsaturated residue with one or more alkenic groups (-C=C-) with (1-4) carbon atoms, such as, for example, ethenyl, 1-methyl ethenyl, 3-butenyl-1,3-diyl and 2-propenyl-1,2-diyl, carboxy-alkenyl group, for example 3-carboxy-2-propenyl group, an alkoxy carbonyl-alkenyl group with (1-4) carbon atoms, such as, for example, 3-methoxy carbonyl-2-propenyl group;
- R¹ represents hydrogen, an alkyl group with 1-5 carbon atoms (for example methyl, ethyl, n-propyl, n-butyl, sec. butyl, tert. butyl, pentyl) or a hydroxyalkyl group with 1-5 carbon atoms (for example 2-hydroxyethyl, 3-hydroxypropyl, 2-hydroxypropyl, 4-hydroxybutyl, 3-hydroxybutyl, 2-hydroxy-2-methylpropyl, or the hydroxy derivatives of the pentyl isomers);
- R² and R³ are the same or different and each independently represents hydrogen or a straight or branched alkyl group with 1-5 carbon atoms, while one of the groups R² and one of the groups R³ may also form, together with the adjacent carbon atoms, a cycloalkyl group, such as, for example, cyclopentyl and cyclohexyl; R² and R³ may also be hydroxyalkyl groups, such as, for example, hydroxy (C₁-C₅)-alkyl groups, hydroxymethyl and 1-hydroxyethyl, being preferred among the latter and both n and m independently have values between 1 and 2.

Preferably, m and n are greater than 1.6 and smaller than 2.0.

According to a preferred embodiment of the invention,
A = (C₁-C₁₀)alkyl or hydrogen,
R¹ = hydrogen and
R² and R³ = hydrogen or hydroxy(C₁-C₂)alkyl.

Preferably, the compound is according to formula (II): 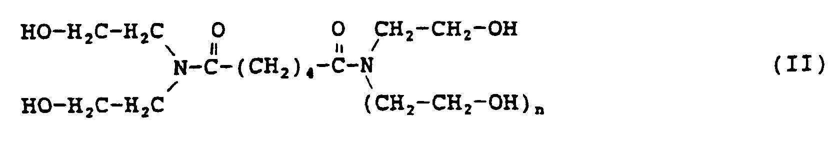 where n is between about 0.2 and about 1.0.

β-hydroxylamide group containing compounds are disclosed in for example US-A-4727111, US-A-4788255, EP-A-322834, US-A-4076917 and EP-A-473380. The complete disclosures are incorporated herein by reference.

As a crosslinker, the combination of two or more β-hydroxyalkylamide groups-containing compounds can also be used.

The weight ratio of the crosslinker to the carboxyl groups-containing compound is preferably between 10:90 and 3:97. The importance of this ratio is explained in Misev, Powder Coatings; Chemistry and Technology (John Wiley and Sons, 1991), pages 196-199, wheras the parameters influencing the powder coating properties are disclosed at pages 174-204.

All customary additives can be added to the powder paint formulation which result after curing in the powder coating system. Such additives include for example pigments, fillers, flow-promoting agents, degassing agents, stabilizers and catalysts. Suitable pigments include for example inorganic pigments (such as for example titanium dioxide, zinc sulphide, iron oxide and chromium oxide) and organic pigments (such as for example azo compounds). Suitable fillers include for example metal oxides, silicates, carbonates and sulphates.

The powder coatings can be prepared according to procedures known, or readily available, to those skilled in the art (see for instance, Misev, Powder Coatings; Chemistry and Technology, pp 225-226 (1991)).

The powder coatings are normally cured by heating at temperatures between about 150°C and about 200°C for about 5 to about 30 min.

Compositions according to the invention may be applied as coatings for metal, wood and plastic substrates. Examples include general-purpose industrial coatings, coatings on machinery and equipment and motorcars.

The invention is illustrated by the following non-limiting examples.

### Example I

In a distillation set-up, 955 grams of neopentyl glycol, 1255 grams of terephthalic acid, 25.3 grams of benzoic acid, 60.5 grams of adipic acid were esterified at 245°C with the aid of an esterification catalyst until an acid number of 5 was obtained. Subsequently, 255 grams of isophthalic acid was added and, on reaching an acid number of 42, esterification was continued under vacuum until an acid number of 34 was reached. The resin had a viscosity (Emila, 158°C) of 170 dPas and a Tg of 57°C. The functionality of the resin was 1.75.

A powder paint was prepared from this resin by mixing 570 grams of the (grinded) resin with 30 grams of the β-hydroxylamide group containing compound (Primid-XL-552^{R} (Rohm and Haas)), 300 grams of TiO₂, 9 grams of a flowing agent (Resiflow-PV-5^{R}) and 2.5 grams of benzoin in an extruder (Buss PLK-46^{R}) at 60 rpm and at 125-130°C. For proper homogeneity of the mixture, the mixture was extruded twice. The cooled blend was ground and then sprayed onto aluminium panels. The paint was cured at either 200°C for 8 min. or 170°C for 20 min.

The properties of the powder coatings thus obtained were as follows:
Reversed impact resistance: 60 inchpound;
Flow: excellent;
Gloss: good;
Blister limit: 110-140µm.

The impact resistance of 60 is the maximum for an aluminium substrate. For the test methods, see pages 284-303 of the already cited Misev, Powder Coatings. The flow has been visually determined.

The flow of a normal powder paint composition can be rated as good at best.

### Example II

Analogous to Example I, a resin was distilled from 881 grams of neopentyl glycol, 1161 grams of terephthalic acid, 13.6 grams of benzoic acid, 83.6 grams of ethylene glycol, 163 grams of isophthalic acid in a first step and with 130 grams of isophthalic acid and 148 grams of adipic acid in a second step. The resin thus obtained had an acid number of 19.6, a viscosity (Emila, 158°C) of 240 dPas and a Tg of 50°C. The functionality of the resin was 1.75.

Analogously to Example I, a powder paint was prepared from this resin using 582 grams of polyester according to the foregoing, 18 grams of Primid-XL-552^{R}, 300 grams of TiO₂, 9 grams of Resiflow-PV-5^{R} and 2.5 grams of benzoin.

Curing was accomplished by heating at 180°C for 15 min.

The impact resistance of the powder coating obtained was 60 inchpound and the flow was excellent. The blister limit was 130-170µm.

## Claims

1. A powder paint comprising a free carboxylic acid groups-containing polyester as a binder and a β-hydroxyalkylamide group-containing compound as a crosslinker, **characterized in that** the average functionality of the polyester is between 1.4 and 1.95 and wherein the polyester contains less than 3 mole% of monofunctional acid or monofunctional alcohol.

2. Powder paint according to claim 1, **characterized in that** the average functionality is less than 1.85.

3. Powder paint according to any one of Claims 1-2, **characterized in that** the polyester contains 0.5-2 mole% of monofunctional acid or monofunctional alcohol.

4. A process for preparing a powder paint by mixing in an extruder a free carboxylic acid groups-containing polyester as a binder, a β-hydroxylamide group-containing compound as a crosslinker and usual additives in a weight ratio crosslinker: carboxyl group containing polyester between 10:90 and 3:97, **characterized in that** the average functionality of the polyester is between 1.4 and 1.95 and the polyester contains less than 3 mole% of monofunctional acid or monofunctional alcohol.

5. Use of a polyester having an average functionality between 1,4 and 1,95, an acid number of 15-150 and a glass transition temperature of between 30°C and 80°C in a powder paint.

6. A substrate at least partially coated with a powder coating based on a powder paint according to any one of claims 1-3.

## Patentansprüche

1. Pulverlack, umfassend einen freie Carbonsäuregruppen-enthaltenden Polyester als ein Bindemittel und eine β-Hydroxyalkylamidgruppen-enthaltende Verbindung als ein Vemetzer, **dadurch gekennzeichnet, daß** die durchschnittliche Funktionalität des Polyesters zwischen 1,4 und 1,95 beträgt, und wobei der Polyester weniger als 3 Mol-% an monofunktionaler Säure oder monofunktionalem Alkohol enthält.

2. Pulverlack gemäß Anspruch 1, **dadurch gekennzeichnet, daß** die durchschnittliche Funktionalität weniger als 1,85 beträgt.

3. Pulverlack gemäß einem der Ansprüche 1-2, **dadurch gekennzeichnet, daß** der Polyester 0,5-2 Mol-% an monofunktionaler Säure oder monofunktionalem Alkohol enthält.

4. Verfahren zum Herstellen eines Pulverlacks durch Mischen eines freie Carbonsäuregruppen-enthaltenden Polyesters als ein Bindemittel, einer β-Hydroxylamidgruppen-enthaltenden Verbindung als ein Vemetzer und üblichen Additiven in einem Gewichtsverhältnis von Vemetzer:Carboxylgruppenenthaltendem Polyester von zwischen 10:90 und 3:97 in einem Extruder, **dadurch gekennzeichnet, daß** die durchschnittliche Funktionalität des Polyesters zwischen 1,4 und 1,95 beträgt und der Polyester weniger als 3 Mol-% an monofunktionaler Säure oder monofunktionalem Alkohol enthält,

5. Verwendung eines Polyesters mit einer durchschnittlichen Funktionalität von zwischen 1,4 und 1,95, einer Säurezahl von 15-150 und einer Glasübergangstemperatur von zwischen 30°C und 80°C in einem Pulverlack.

6. Substrat, mindestens teilweise beschichtet mit einer Pulverbeschichtung auf der Basis eines Pulverlacks gemäß einem der Ansprüche 1-3.

## Revendications

1. Peinture en poudre comprenant un polyester contenant des groupes acides carboxyliques libres, servant de liant, et un composé contenant des groupes β-hydroxyalkylamide servant d'agent de réticulation, **caractérisée en ce que** la fonctionnalité moyenne dudit polyester est comprise entre 1,4 et 1,95 et dans laquelle le polyester contient moins de 3% en moles d'acide monofonctionnel ou d'alcool monofonctionnel.

2. Peinture en poudre selon revendication 1, **caractérisée en ce que** la fonctionnalité moyenne est inférieure à 1,85.

3. Peinture en poudre selon l'une quelconque des revendications 1 et 2, **caractérisée en ce que** le polyester contient de 0,5 à 2% en moles d'acide monofonctionnel ou d'alcool monofonctionnel.

4. Procédé pour préparer une peinture en poudre par mélange dans une extrudeuse d'un polyester contenant des groupes acides carboxyliques libres servant de liant, d'un composé contenant des groupes β-hydroxylamide qui sert d'agent de réticulation et d'additifs usuels, dans des proportions pondérales de 10:90 à 3:97 entre l'agent de réticulation et le polyester contenant des groupes carboxyle, **caractérisé en ce que** la fonctionnalité moyenne dudit polyester est comprise entre 1,4 et 1,95 et le polyester contient moins de 3% en moles d'acide monofonctionnel ou d'alcool monofonctionnel.

5. Utilisation d'un polyester ayant une fonctionnalité moyenne comprise entre 1,4 et 1,95, un indice d'acide de 15 à 150 et une température de transition vitreuse comprise entre 30 et 80°C dans une peinture en poudre.

6. Substrat revêtu au moins en partie d'un revêtement en poudre à base de peinture en poudre selon l'une quelconque des revendications 1 à 3.
